# EUROPÄISCHE PATENTANMELDUNG

(11) **EP 4 104 655 A1**
(43) Veröffentlichungstag der Anmeldung: **21.12.2022**
(21) Anmeldenummer: 22179121.3
(22) Anmeldetag: 15.06.2022
(51) Int. Cl.: A01B 63/00, A01B 61/04, A01B 39/18, A01B 19/02

(54) **BODENBEARBEITUNGSGERÄT**

(30) Priorität: 16.06.2021 DE 202021103230 U
(71) Anmelder: Treffler Maschinenbau GmbH & Co. KG, 86554 Pöttmes-Echsheim (DE)
(72) Erfinder: Treffler, Paul, 86554 Pöttmes-Echsheim (DE)
(74) Vertreter: TBK

(57) **Zusammenfassung**

Die Erfindung betrifft ein Bodenbearbeitungsgerät mit einem Rahmen, von dem eine Vielzahl von Arbeitsvorsprüngen in Richtung zum Boden hin vorragen, zumindest einer Gemeinschaftseinstellvorrichtung, die in der Lage ist, den Vorsprungsbetrag von der Vielzahl von Arbeitsvorsprüngen gemeinschaftlich einzustellen, und zumindest einer Teileinstellvorrichtung, die in der Lage ist, den von der Gemeinschaftseinstellvorrichtung eingestellten Vorsprungsbetrag für einen einzelnen oder eine Teilgruppe von der Vielzahl von Arbeitsvorsprüngen zu ändern.

## Beschreibung

### Technisches Gebiet der Erfindung

Die vorliegende Erfindung betrifft ein Bodenbearbeitungsgerät.

### Stand der Technik

In dem Stand der Technik ist ein Bodenbearbeitungsgerät ein landwirtschaftliches Gerät zur Bodenbearbeitung, welches unter anderem zur mechanischen Unkrautbekämpfung Unkraut aus dem Boden entfernt bzw. mit Erde bedeckt oder auch einen verkrusteten Boden aufbrechen kann.

### Zusammenfassung der Erfindung

Der Erfindung liegt die Aufgabe zugrunde, ein Bodenbearbeitungsgerät bereitzustellen, der eine verbesserte Bodenbearbeitung aufgrund eines individualisierten Arbeitsdrucks bei der Bodenbearbeitung ermöglicht.

Diese Aufgabe wird durch ein Bodenbearbeitungsgerät gemäß Anspruch 1 erfüllt. Vorteilhafte Weiterbildungen sind Gegenstand der Unteransprüche.

Ein erfindungsgemäßes Bodenbearbeitungsgerät weist einen Rahmen, von dem eine Vielzahl von Arbeitsvorsprüngen in Richtung zum Boden hin vorragen, zumindest eine Gemeinschaftseinstellvorrichtung, die in der Lage ist, einen Vorsprungsbetrag von der Vielzahl von Arbeitsvorsprüngen gemeinschaftlich einzustellen, und zumindest eine Teileinstellvorrichtung auf, die in der Lage ist, den von der Gemeinschaftseinstellvorrichtung eingestellten Vorsprungsbetrag für einen einzelnen oder eine Teilgruppe von der Vielzahl von Arbeitsvorsprüngen zu ändern.

Unkraut, das sich ungewollt auf dem Boden ansäht, soll von dem Boden entfernt werden. Damit hat die Aussaat mehr Platz auf der Bodenoberfläche zur Verfügung, erhält mehr Sonnenlicht und mehr Nährstoffe aus dem Boden. Somit kann die Aussaat besser wachsen. Dadurch wird ein möglichst hoher Ernteertrag aus einem landwirtschaftlich bestellten Boden begünstigt.

Der Boden wird bereits beim Aussäen verdichtet, wenn mit einem landwirtschaftlichen Fahrzeug gearbeitet wird. Somit ergeben sich in regelmäßigen Abständen gemäß einer Spurbreite des landwirtschaftlichen Fahrzeuges bzw. Bodenbearbeitungsgeräts verdichtete und abgesenkte Bodenbereiche in einer Querrichtung zu einer Bodenbearbeitungsrichtung. In der Regel werden Kulturpflanzen in einer Reihe angesät. Bei einer Bepflanzung mit Dammkulturen, werden die Pflanzen auf einem Damm angesät. Zwischen den Dämmen befinden sich in einer Querrichtung zu der Bodenbearbeitungsrichtung Täler, in denen nichts angesät wird. Somit ist eine Bodenhöhe quer zu der Bodenbearbeitungsrichtung (Bodenoberflächenquerprofil), eine Bodenfestigkeit und der Bewuchs des landwirtschaftlich bestellten Bodens nicht gleichmäßig. Ein landwirtschaftlich bestellter Boden hat somit heterogene Eigenschaften. Außerdem gibt es verschiedene Bodenarten, wie lehmhaltige Böden oder sandhaltige Böden, für die jeweils verschiedene Vorsprungsbeträge benötigt werden. Auch Umwelteinflüsse, wie z.B. Trockenheit, beeinflussen den notwendigen Arbeits- bzw. Zinkendruck bzw. die notwendigen Vorspru ngsbeträge.

Mit dem erfindungsgemäßen Bodenbearbeitungsgerät wird der Boden so bearbeitet, dass der Boden an seiner Oberfläche ungeachtet des Bodenoberflächenquerprofils gleichmäßig aufgelockert bzw. verschüttet wird.

Dazu muss der Arbeitsvorsprung um einen bestimmten, über das Bodenoberflächenquerprofil gleichbleibenden Betrag in den Boden hineinragen und das Bodenbearbeitungsgerät in einer Bodenbearbeitungsrichtung über den Boden gezogen werden. Der Boden setzt dem Arbeitsvorsprung dabei einen Widerstand entgegen, der auf den Arbeitsvorsprung als Arbeits- bzw. Zinkendruck wirkt. Je fester der Boden und je tiefer der Arbeitsvorsprung in den Boden ragt, desto höher ist der Arbeits- bzw. Zinkendruck. Je mehr der Boden mit Unkraut bewachsen ist, desto mehr Widerstand setzt der Boden dem Arbeitsvorsprung entgegen. Mit anderen Worten kann mit einem bestimmten Arbeits- bzw. Zinkendruck gesteuert werden, wie stark die Oberfläche des Bodens verschüttet wird, bzw. wie stark Unkraut mechanisch entfernt wird.

Ferner kann die Teileinstellvorrichtung den von der Gemeinschaftseinstellvorrichtung eingestellten Vorsprungsbetrag für einen einzelnen oder eine Teilgruppe von der Vielzahl von Arbeitsvorsprüngen vergrößern oder verringern. Dies geschieht in Übereinstimmung mit dem jeweils vorhandenen Bodenoberflächenquerprofil und nimmt Bezug auf etwaige Dämme und Täler sowie Bodenkomprimierungen aufgrund des Gewichts eines Schleppers bzw. des Gewichts eines Bodenbearbeitungsgeräts (z.B. Zinkenstriegel).

Die heterogenen Eigenschaften des Bodens erfordern ein flexibles Einstellen von Vorsprungsbeträgen der Arbeitsvorsprünge. Dabei ist es vorteilhaft, wenn ein Basiswert eingestellt werden kann, der für alle Arbeitsvorsprünge identisch ist. Dies geschieht mittels der Gemeinschaftseinstellvorrichtung. Damit kann das Bodenbearbeitungsgerät bzw. der Zinkenstriegel z.B. generell auf eine Bodenart eingestellt werden. Zusätzlich ist es vorteilhaft, wenn einzelne Arbeitsvorsprünge oder Arbeitsvorsprungsgruppen separat eingestellt werden können. Damit kann der Zinkenstriegel beispielsweise auf ein bestimmtes Bodenoberflächenquerprofil (eine Abfolge an Dämmen und Tälern) oder Spuren des landwirtschaftlichen Fahrzeuges eingestellt werden. Dies geschieht mittels der Teileinstellvorrichtung. Die Teileinstellvorrichtung ist in der Lage einzelne oder Untergruppen von Zinken bzw. Arbeitsvorsprüngen einzustellen, die insgesamt über die Gemeinschaftseinstellvorrichtung eingestellt werden.

Der Vorteil der Kombination einer Gemeinschaftseinstellvorrichtung mit Teileinstellvorrichtungen liegt darin, dass die notwendige Zeit für die Gesamteinstellung des Bodenbearbeitungsgeräts bzw. Zinkenstriegels auf die Eigenschaft des Bodens verkürzt wird, verglichen mit einem Einstellen jedes einzelnen Arbeitsvorsprungs lediglich über die Teileinstellvorrichtungen. Dabei kann der von der Gemeinschaftseinstellvorrichtung eingestellte Vorsprungsbetrag über die Teileinstellvorrichtung entweder vergrößert oder verringert werden. Sind die einzelnen Arbeitsvorsprünge über ihren jeweiligen Vorsprungsbetrag mittels Teileinstellungsvorrichtungen relativ zu einem bestimmten Bodenbearbeitungsbereich eingestellt, können mittels der Gemeinschaftseinstellvorrichtung alle Arbeitsvorsprünge um den gleichen Vorsprungsbetrag vergrößert oder verringert werden. Somit können die eingestellten Arbeitsvorsprünge soweit mittels der Gemeinschaftseinstellvorrichtung verringert werden, dass die Arbeitsvorsprünge den Boden nicht mehr berühren und dabei trotzdem ein Bodenoberflächenquerprofil darstellen bzw. nachempfinden. Dadurch kann optisch sehr leicht überprüft werden, ob die Arbeitsvorsprünge relativ zu einem Bodenoberflächenquerprofil korrekt eingestellt sind.

Ferner können Zugelemente Anschlussabschnitte der Arbeitsvorsprünge (wie z.B. Striegelzinken oder Roll-bzw. Hacksterne) mit zugehörigen Anschlussabschnitten der Gemeinschaftseinstellvorrichtung verbinden und
die Gemeinschaftseinstellvorrichtung kann den Vorsprungsbetrag von der Vielzahl von Arbeitsvorsprüngen dadurch einstellen, dass die Anschlussabschnitte der Gemeinschaftseinstellvorrichtung um eine Dreh- bzw. Schwenkachse der Gemeinschaftseinstellvorrichtung herum bewegt werden.

Mit anderen Worten sind die Arbeitsvorsprünge über Zugelemente mit der Gemeinschaftseinstellvorrichtung verbunden. Dabei weisen sowohl die Arbeitsvorsprünge, als auch die Gemeinschaftseinstellvorrichtung Anschlussabschnitte auf, die über die Zugelemente verbunden sind. Die Trennung von Zugelementen und Gemeinschaftseinstellvorrichtung bzw. Arbeitsvorsprung hat den Vorteil, dass verschiedene Zugelemente mit verschiedenen Zugstärken verwendet werden können und somit entsprechende Arbeits- bzw. Zinkendrücke voreinstellbar sind.

Die Verwendung von Zugelementen ermöglicht es außerdem, die Arbeitsvorsprünge und die Gemeinschaftseinstellvorrichtung in der Bodenbearbeitungsrichtung relativ zueinander zu versetzen. Daher kann die Gemeinschaftseinstellvorrichtung an eine Stelle des Bodenbearbeitungsgeräts bzw. Zinkenstriegels verlagert werden, die geschützt ist vor äußeren Einwirkungen, Schmutz und Feuchtigkeit. Das verbessert die Langlebigkeit des Bodenbearbeitungsgeräts. Bei in Bodenbearbeitungsrichtung relativ zueinander versetzten Arbeitsvorsprüngen kommen entsprechend unterschiedlich lange Zugelemente zum Einsatz.

Die Verwendung von Zugelementen ermöglicht es außerdem, dass die einzelnen Arbeitsvorsprünge in der Bodenbearbeitungsrichtung versetzt zueinander angeordnet sind, wohingegen die Gemeinschaftseinstellvorrichtung in der Bodenbearbeitungsrichtung an einer einheitlichen Stelle platziert sein kann. Somit können eine Vielzahl an Arbeitsvorsprüngen eingesetzt werden und die Gemeinschaftseinstellung befindet sich an einer einheitlichen Stelle. Dadurch wird die Übersichtlichkeit über eingestellte Vorsprungsbeträge verbessert.

Dabei kann der Anschlussabschnitt beispielsweise als Öse ausgeführt sein und das Zugelement kann mittels einem Schnappverschluss in die Öse eingehängt werden. Für den Fall, dass ein Zugelement mit einer anderen Zugstärke verwendet wird, oder dass ein Zugelement defekt ist, ermöglicht diese Ausführung ein schnelles und kostengünstiges Austauschen eines Zugelementes.

Dabei kann der Anschlussabschnitt der Gemeinschaftseinstellvorrichtung aber auch unterschiedlich zu dem Anschlussabschnitt des Arbeitsvorsprunges ausgeführt sein, wobei entsprechende Stellen der Zugelemente entsprechend zu den Anschlussabschnitten gestaltet sind. Beispielsweise kann der Anschlussabschnitt der Gemeinschaftseinstellvorrichtung als Öse ausgeformt sein und die entsprechende Stelle des Zugelementes kann als Haken oder Nippel ausgeformt sein, wobei der Anschlussabschnitt des Arbeitsvorsprunges eine profilierte Form wie z.B. eine Schwalbenschwanzform haben kann, in die eine entsprechende Stelle des Zugelementes eingeschoben werden kann. Der Anschlussabschnitt des Arbeitsvorsprungs kann so gestaltet sein, dass die Verbindung zwischen Zugelement und Arbeitsvorsprung umso schwerer zu lösen ist, je höher die Zugstärke ist. Somit ist eine Betriebssicherheit des Bodenbearbeitungsgeräts mittels Selbstsicherung der Zugelemente sichergestellt.

Dadurch, dass die Anschlussabschnitte der Gemeinschaftseinstellvorrichtung um eine Dreh- bzw. Schwenkachse der Gemeinschaftseinstellvorrichtung bewegt werden können, kann die freie Länge der Zugelemente verändert werden. Das hat den Vorteil, dass Zugelemente oder Arbeitsvorsprünge nicht ausgetauscht werden müssen, wenn ein anderer Vorsprungsbetrag benötigt wird.

Der gewünschte Vorsprungsbetrag kann mittels Arretierung der Anschlussabschnitte der Gemeinschaftseinstellvorrichtung in verschiedenen Positionen arretiert werden. Alternativ kann die Position der Anschlussabschnitte auch mechanisch gekoppelt an eine bestimmt Bodenhöhe sein. Das hat den Vorteil, dass Enden von Arbeitsvorsprüngen sich im Betrieb immer gleich tief im Boden befinden aufgrund des gleichen Arbeits- bzw. Zinkendrucks, selbst wenn der Boden in einer Bodenbearbeitungsrichtung des landwirtschaftlichen Fahrzeugs eine sich ändernde Höhe aufweist.

Das Bodenbearbeitungsgerät wird in einer Bodenbearbeitungsrichtung über den zu bearbeitenden Boden gezogen. Dabei können aufgrund der Inhomogenität des Bodens oder aufgrund von Bepflanzung einzelnen Arbeitsvorsprüngen ein größerer oder kleinerer Widerstand entgegengebracht werden. Es ist dabei vorteilhaft, wenn sich auch die Arbeitsvorsprünge an einem Ende, das entfernt von dem Boden ist, um eine Dreh- bzw. Schwenkachse bewegen lassen. Werden die Arbeitsvorsprünge von ihrer Ausrichtung zum Boden hin um die Dreh- bzw. Schwenkachse bewegt, verringert sich der Vorsprungsbetrag entsprechend und die mechanische Bearbeitungswirkung des entsprechenden Arbeitsvorsprungs ist reduziert. Bei fest eingestellten Gemeinschaftseinstellvorrichtung und Teileinstellvorrichtungen kann mittels einem Zugelement, das ein Federbauteil beinhalten kann, die Bewegung des Arbeitsvorsprunges zusätzlich ermöglichen.

Ferner kann die Teileinstellvorrichtung in der Lage sein, den von der Gemeinschaftseinstellvorrichtung gemeinschaftlich eingestellten Vorsprungsbetrag zusätzlich zu ändern, indem sie die freie Länge der Zugelemente oder den Abstand zwischen den Anschlussabschnitten von dem einzelnen oder der Teilgruppe von der Vielzahl von Arbeitsvorsprüngen und den zugehörigen Anschlussabschnitten der Gemeinschaftseinstellvorrichtung verkürzt oder verlängert verglichen zu einer freien Länge der Zugelemente oder dem Abstand zwischen den Anschlussabschnitten von den Verbleibenden von der Vielzahl von Arbeitsvorsprüngen und den zugehörigen Anschlussabschnitten der Gemeinschaftseinstellvorrichtung.

Die freie Länge kann basierend auf dem durch die Gemeinschaftseinstellvorrichtung eingestellten Wert mittels Teileinstellungsvorrichtungen vergrößerbar bzw. verringerbar sein. Sind die einzelnen Arbeitsvorsprünge über ihren jeweiligen Vorsprungsbetrag mittels Teileinstellungsvorrichtungen relativ zu einem bestimmten Bodenbearbeitungsbereich eingestellt, können mittels der Gemeinschaftseinstellvorrichtung alle Zugelemente um die gleiche freie Länge verlängert oder reduziert werden bzw. Arbeitsvorsprünge um den gleichen Vorsprungsbetrag verlängert oder reduziert werden. Somit können die eingestellten Arbeitsvorsprünge soweit mittels der Gemeinschaftseinstellvorrichtung reduziert werden, dass die Arbeitsvorsprünge den Boden nicht mehr berühren oder ohne großen Druck berühren, aber trotzdem ein Bodenoberflächenquerprofil darstellen bzw. zu diesem korrespondieren oder mit anderen Worten das Bodenoberflächenquerprofil in einem vertikalen Abstand dazu nachempfinden. Dadurch kann optisch sehr leicht überprüft werden, ob die Arbeitsvorsprünge relativ zu einem Bodenoberflächenquerprofil korrekt eingestellt sind. Dadurch wird die Einstellung auch für sehr breite Bodenbearbeitungsgeräte (z.B. Zinkenstriegel) vereinfacht.

Indem lediglich die feie Länge des Zugelementes verändert wird, können identische Zugelemente verwendet werden für die Erzielung unterschiedlicher Vorsprungsbeträge. Das Bodenbearbeitungsgerät kann somit kostengünstig hergestellt werden, da jedem Arbeitsvorsprung das gleiche Zugelement zugeordnet werden kann.

Neben der freien Länge des Zugelementes kann auch der Verlauf des Zugelements oder die Verläufe mehrerer Zugelemente geändert werden, um so den Abstand zwischen den Anschlussabschnitten von dem einzelnen oder der Teilgruppe von der Vielzahl von Arbeitsvorsprüngen und den zugehörigen Anschlussabschnitten der Gemeinschaftseinstellvorrichtung zu verkürzen oder zu verlängern verglichen zu dem Abstand zwischen den Anschlussabschnitten von den Verbleibenden von der Vielzahl von Arbeitsvorsprüngen und den zugehörigen Anschlussabschnitten der Gemeinschaftseinstellvorrichtung. Der Verlauf von Zugelementen kann auch durch eine Teileinstellvorrichtung z.B. durch ein Verschwenken oder Versetzen von dieser geändert werden.

Die Teileinstellvorrichtung kann auch innerhalb des Zugelementes und so ausgeführt sein, dass sich ein Vorsprungsbetrag unabhängig von der Gemeinschaftseinstellvorrichtung vergrößern oder verringern lässt. Beispielsweise kann eine gabelförmige Vorrichtung mit zwei Stäben quer zu der Bodenbearbeitungsrichtung vorgesehen sein. Dabei sind die Zugelemente als Seile vorgesehen. Wenn die Seile zwischen den beiden Stäben verlaufen, kann durch Drehen der gabelförmigen Vorrichtung (Teileinstellvorrichtung) einzelne oder mehrere Zugelemente gekürzt bzw. verlängert werden je nach Drehrichtung und Drehwinkel der gabelförmigen Vorrichtung. Ein Verschwenken oder Versetzen (horizontal und/oder vertikal) einer geeigneten Teileinstellvorrichtung kann z.B. den Verlauf von Zugelementen so ändern, dass ein entsprechender Abstand zwischen den Anschlussabschnitten von dem einzelnen oder der Teilgruppe von der Vielzahl von Arbeitsvorsprüngen und den zugehörigen Anschlussabschnitten der Gemeinschaftseinstellvorrichtung verkürzt oder verlängert wird.

Mit der Teileinstellvorrichtung sind einzelne Vorsprungsbeträge unabhängig von den übrigen Vorsprungsbeträgen möglich. Somit können einzelne Vorsprungsbeträge separat auf eine bestimmte Beschaffenheit des Bodens, wie Bodenoberflächenquerprofil, Bodenfestigkeit und Bewuchs eingestellt werden. Damit wird eine verbesserte Bodenbearbeitung ermöglicht.

Ein Zugelement kann dabei aus mehreren Bauteilen bestehen und elastische Bauteile beinhalten. Über ein elastisches Bauelement ist es auch möglich, die freie Länge des Zugelementes zu ändern. Dadurch kann eine Bearbeitungstiefe abhängig von einem Widerstand angepasst werden, der einzelnen Arbeitsvorsprüngen entgegengebracht wird.

Beispielsweise kann ein Zugelement aus einer Feder, Seilabschnitten und/oder Stababschnitten bestehen. Aber auch ein elastisches Seil ist denkbar. Die Ausgestaltung des Zugelements als Seil ist Vorteilhaft, da eine Verkürzung einer freien Länge eines Seiles ein geringer Stauraum für das verbleibende Material des Seiles benötigt wird. Somit ist ein kompakter Aufbau der Teileinstellvorrichtung möglich.

Der Anschlussabschnitt 11 des Zinkens bzw. Arbeitsvorsprungs kann entlang dem Arbeitsvorsprung verschieblich ausgestaltet sein. Dadurch kann die Wirkung beeinflusst werden, die eine bestimmte Dehnung des Federelements des Zugelements auf den Zinkendruck hat. Je höher der Anschlussabschnitt in dem Arbeitsvorsprung positioniert wird, desto geringer ist der Einfluss der Federdehnung auf den Arbeitsdruck.

Ferner kann die Teileinstellvorrichtung in der Lage sein, den von der Gemeinschaftseinstellvorrichtung gemeinschaftlich eingestellten Vorsprungsbetrag zusätzlich zu ändern, indem sie einen Achsenabstand von Zugelementen oder Anschlussabschnitten von dem einzelnen oder der Teilgruppe von der Vielzahl von Arbeitsvorsprüngen hinsichtlich einer Dreh- bzw. Schwenkachse der Gemeinschaftseinstellvorrichtung vergrößert oder verkleinert verglichen zu einem Achsenabstand von Zugelementen oder Anschlussabschnitten von den Verbleibenden von der Vielzahl von Arbeitsvorsprüngen hinsichtlich einer Dreh- oder Schwenkachse der Gemeinschaftseinstellvorrichtung. Der Ausdruck "Achsenabstand" betrifft hier den Abstand des Zugelements bzw. dessen Anschlussabschnitt an der Teil- bzw. Gemeinschaftseinstellvorrichtung von der Drehachse der Gemeinschaftseinstellvorrichtung. Falls die Anschlussabschnitte der Zugelemente über radiale Arme an einer Drehwelle (Beispiel einer Gemeinschaftseinstellvorrichtung) angebracht sind, können die radialen Arme teleskopartig ausgebildet sein, um den Achsenabstand veränderlich zu gestalten.

Ferner kann die Teileinstellvorrichtung als ein von der Gemeinschaftseinstellvorrichtung separates Teileinstellbauteil vorgesehen sein, das senkrecht zur Achsenrichtung der Gemeinschaftseinstellvorrichtung an der Gemeinschaftseinstellvorrichtung lösbar montierbar ist.

Wenn die Teileinstellvorrichtung lösbar von der Gemeinschaftseinstellvorrichtung montierbar ist, können unterschiedliche Teileinstellvorrichtungen in Kombination mit der Gemeinschaftseinstellvorrichtung verwendet werden. Mit anderen Worten kann durch den Austausch einer Teileinstellvorrichtung eingestellt werden, um wie viel der entsprechende Vorsprungsbetrag vergrößert oder verkleinert wird. Somit können die einzelne Vorsprungsbeträge separat auf eine bestimmte Beschaffenheit des Bodens, wie Bodenoberflächenquerprofil, Bodenfestigkeit und Bewuchs eingestellt werden. Damit wird eine verbesserte Bodenbearbeitung ermöglicht. Außerdem können für verschiedene Böden oder verschiedene Saaten verschiedene Sätze an Teileinstellbauteilen zusammengestellt werden. Somit müssen lediglich die Sätze an Teileinstellbauteilen aus der Gemeinschaftseinstellvorrichtung getauscht werden, um einen anderen Boden oder eine andere Saat striegeln zu können, ohne zuvor erneut die unterschiedlichen Vorsprungsbeträge zu ermitteln und zu überprüfen. Vorzugsweise sich die Teileinstellbauteile werkzeuglos anbringbar.

Die Teileinstellbauteile können dabei mittels Klipse an der Gemeinschaftseinstellvorrichtung befestigt werden, was einen schnellen Austausch des Teileinstellbauteils ermöglicht.

Außerdem können die Teileinstellbauteile mittels zumindest einer Flügelmutter an der Gemeinschaftseinstellvorrichtung befestigt werden, was eine günstige Herstellung der Teileinstellbauteile ermöglicht.

Zusätzlich können seitlich an den Teileinstellbauteilen und den entsprechenden Stellen der Gemeinschaftseinstellvorrichtung Führungen vorgesehen sein, was die Montage vereinfacht und die Positionsgenauigkeit der Teileinstellbauteile erhöht.

Außerdem können die Teileinstellbauteile mittels Formschluss wie z.B. einer Schwalbenschwanzform an der Gemeinschaftseinstellvorrichtung befestigt sein. Wobei die Gemeinschaftseinstellvorrichtung zumindest einen Anschlag hat, um die axiale Bewegung der Teileinstellbauteile bei der Montage zu beenden und die Teileinstellbauteile zu positionieren. Dabei kann das Zugelement ein Seil als Bestandteil haben und das Seil kann das Teileinstellbauteil umschlingen, wenn der Zinkenstriegel oder allgemein das Bodenbearbeitsgerät für die Bodenbearbeitung verwendet wird. Dann sichert das Seil des Zugelements das Teileinstellbauteil gegen ein Lösen von der Gemeinschaftseinstellvorrichtung.

Ferner kann die Gemeinschaftseinstellvorrichtung im Wesentlichen aus einer dreh- und/oder schwenkbaren Welle bestehen, die sich quer zur Arbeitsrichtung des Bodenbearbeitungsgeräts erstreckt, und die Teileinstellvorrichtung ist in axialer und/oder radialer Richtung der dreh- und/oder schwenkbaren Welle fixierbar.

Die Gemeinschaftseinstellvorrichtung kann als Welle, quer zu der Arbeitsrichtung des Bodenbearbeitungsgerätes (Bodenbearbeitungsrichtung) ausgeführt sein. Beinhalten die Zugelemente Seile an der Stelle der Anschlussabschnitte, können diese durch Drehen der Welle auf die Welle gewickelt werden, um einen Vorsprungsbetrag einzustellen. Das ermöglicht eine platzsparende und kostengünstige Ausführung des Bodenbearbeitungsgerätes.

Die Arbeitsvorsprünge befinden sich entgegen der Bodenbearbeitungsrichtung versetzt zu der Welle. Die Zugelemente sind parallel zu der Bodenbearbeitungsrichtung ausgerichtet. Somit wirkt keine Querkraft auf die Zugelemente weder im Stand noch während der Bodenbearbeitung. Dadurch wird verhindert, dass sich die Zugelemente während einer Verdrehung der Welle quer zu der Bodenbearbeitungsrichtung auf der Welle verschieben. Die Zugelemente behalten ihre Position auf der Welle bei, auch wenn es bei der Verwendung des Bodenbearbeitungsgerätes während der Bodenbearbeitung zu starken Vibrationen kommt. Das stellt die Arbeitsgenauigkeit des Bodenbearbeitungsgerätes sicher, selbst über eine lange Nutzungsdauer der Bodenbearbeitungsgerätehinweg ohne ein nötiges Nachjustieren der Einstellung der Gemeinschaftseinstellvorrichtung und der Teileinstellvorrichtung.

Allerdings kann die Gemeinschaftseinstellvorrichtung zusätzlich Führungsschultern aufweisen, die die Welle in radialer Richtung umgeben und die jeweils paarweise quer zu den Anschlussabschnitten der Gemeinschaftseinstellvorrichtung angeordnet sind. Dadurch kann verhindert werden, dass sich die Zugelemente axial zu der Welle verschieben, wenn beispielsweise die Teileinstellvorrichtung in axialer Richtung verschoben wird oder eine Querkraft von außen wirkt.

Die Teileinstellvorrichtung kann axial zu der Gemeinschaftseinstellvorrichtung verschiebbar und in zumindest zwei Positionen fixierbar sein. Beispielsweise kann sich die Teileinstellvorrichtung im Inneren der Gemeinschaftseinstellvorrichtung abstützen. Dadurch kann ausgewählt werden, ob die Teileinstellvorrichtung in einer Position fixiert ist, in der die Teileinstellvorrichtung nicht aktiv ist, oder ob die Teileinstellvorrichtung in einer anderen Position fixiert ist, in der ein bestimmter Arbeitsvorsprung um einen Vorsprungsbetrag vergrößert oder verkleinert wird.

Die Teileinstellvorrichtung kann mittels einer Achse in der Gemeinschaftseinstellvorrichtung aufgenommen werden. Die Achse kann parallel zu der Drehachse der Gemeinschaftseinstelleinrichtung sein. Um diese Achse ist die Teileinstellvorrichtung relativ zu der Gemeinschaftseinstellvorrichtung verdrehbar und kann in einer gewünschten Position fixiert werden. Dadurch kann der Betrag eingestellt werden, um den die Teileinstellvorrichtung den Vorsprungsbetrag relativ zu dem Vorsprungsbetrag der Gemeinschaftseinstellvorrichtung ändert.

Ferner kann das Teileinstellbauteil in Achsenrichtung der Gemeinschaftseinstellvorrichtung länglich sein, so dass mehrere benachbarte Zugelemente gleichzeitig eingestellt werden können.

Das Teileinstellbauteil kann axial zu der Gemeinschaftseinstellvorrichtung verschiebbar und in zumindest zwei Positionen fixierbar sein. Dadurch kann ausgewählt werden, wie viele Zugelemente die Teileinstellvorrichtung quert. Bei jedem Zugelement, das die Teileinstellung quer zu der Bodenbearbeitungsrichtung durchquert, kann für den zugehörigen Arbeitsvorsprung der Vorsprungsbetrag geändert werden.

Dadurch, dass das Teileinstellbauteil länglich ist können zum einen mehrere Arbeitsvorsprünge gleichzeitig verkürzt oder verlängert werden, zum anderen ist durch die längliche Gestaltung sofort erkennbar welche Arbeitsvorsprünge von dem Teileinstellbauteil beeinflusst werden. Die Übersichtlichkeit des Bodenbearbeitungsgerätes wird somit unterstützt.

Dadurch, dass ein Teileinstellbauteil mehrere Arbeitsvorsprünge gleichzeitig verkürzen oder verlängern kann, wird die Einstellzeit reduziert, verglichen mit einem Fall, in dem das Teileinstellbauteil jeweils nur einen Arbeitsvorsprung beeinflusst.

Ferner kann das Teileinstellbauteil einen sich verändernden Querschnitt aufweisen, in einer Richtung senkrecht zur Achsenrichtung der dreh- und/oder schwenkbaren Welle und senkrecht zu einer Montagerichtung des Teileinstellbauteils an der dreh- und/oder schwenkbaren Welle gesehen.

Das Teileinstellbauteil, das auf der dreh- und/oder schwenkbaren Welle montiert ist, hat einen sich ändernden Querschnitt in Richtung der Drehachse der dreh- und/oder schwenkbaren Welle. Diese Querschnittsänderung kann sich in einer Länge erstrecken, die ein oder mehrere Zugelemente quert. Dadurch können mehrere Arbeitsvorsprünge um unterschiedliche Vorsprungsbeträge vergrößert oder verkleinert werden. Somit können einzelne Vorsprungsbeträge separat auf ein Bodenoberflächenquerprofil, eine Bodenfestigkeit und einen Bewuchs eingestellt werden. Damit wird eine verbesserte bzw. gleichmäßigere Bodenbearbeitung ermöglicht.

Dabei kann die Querschnittsänderung stetig verlaufen, aber auch Stufen oder Vorsprünge aufweisen. Vorsprünge können dazu genutzt werden, die Zugelemente in ihrer Position zu halten, wenn sie in der Richtung quer zu den Zugelementen vorgesehen sind. Das stellt die Arbeitsgenauigkeit des Bodenbearbeitungsgerätes sicher, selbst nach einer langen Nutzungsdauer in der gleichen Einstellung der Gemeinschaftseinstellvorrichtung und der Teileinstellvorrichtung.

Auch quer zu der Drehachse der dreh-/und schwenkbaren Welle bzw. in Wellenumfangsrichtung kann das Teileinstellbauteil eine Querschnittsänderung aufweisen. Das hat den Vorteil, dass eine Änderung eines Vorsprungsbetrages eines Arbeitsvorsprungs allmählich verlaufen kann. Das schont die Beanspruchung des Zugelementes und ist förderlich für eine hohe Lebensdauer der Zugelemente.

Aber auch in verschiedenen Richtungen quer zu der Montagerichtung des Teileinstellbauteils kann das Teileinstellbauteil Querschnittsänderungen aufweisen. Beispielsweise kann somit ein Teileinstellbauteil in Montagerichtung um 90° gedreht eingebaut werden und verursacht dann andere Vorsprungsbeträge, als montiert in der Ausgangsposition. Somit können in einem Teileinstellbauteil verschiedenen Varianten an Vorsprungsbeträgen (Vorsprungsvarianten) realisiert sein. Durch entsprechend verdrehtes Montieren (z.B. um 90° in der Montagerichtung) des Teileinstellbauteils wird dann eine bestimmte Variante ausgewählt. Das verbessert die Flexibilität und die Anwendbarkeit des Teileinstellbauteils und reduziert den Arbeitsaufwand für die Änderung von Vorsprungsbeträgen.

Ferner kann der sich verändernden Querschnitt hinsichtlich einer Längsrichtung des Teileinstellbauteils in der Mitte größer sein als an den axialen Enden von diesem.

Beispielsweise Dammkulturen sind auf Dämmen angesät. Zwischen diesen Dämmen befinden sich Täler. Mit einer Form des Teileinstellbauteils, dessen Querschnitt in der Mitte größer ist als an seinen axialen Enden, kann das

Bodenoberflächenquerprofil bei Dammkulturen sehr gut abgebildet werden und die Bodenbearbeitung für die Dammkulturen ist gut möglich, was in einem hohen Ernteertrag resultiert. Außerdem wird dadurch ein Problem gelöst, das durch eine gewöhnliche Reifengeometrie entsteht. Landwirtschaftliche Reifen (insbesondere Reifen von Bodenbearbeitungsgeräten) haben oft einen runden bzw. bauchigen Querschnitt. Dadurch erzeugt ein axial mittlerer Abschnitt des Reifens eine größere Bodenverdichtung als die beiden axial äußeren Abschnitte. Das Teileinstellbauteil, das einen sich ändernden Querschnitt in Achsenrichtung aufweist, löst dieses Problem, da die Arbeitsvorsprünge bzw. deren Arbeitsdruck dieser Geometrie entsprechen.

Ferner kann die Teileinstellvorrichtung als ein Teileinstellbauteil vorgesehen sein, das in Achsenrichtung der Gemeinschaftseinstellvorrichtung verschiebbar an der Gemeinschaftseinstellvorrichtung montiert ist.

Die Teileinstellvorrichtung kann axial zu der Gemeinschaftseinstellvorrichtung verschiebbar und in zumindest zwei Positionen fixierbar sein. Dadurch kann ausgewählt werden, wie viele Zugelemente die Teileinstellvorrichtung quert. Bei jedem Zugelement, das die Teileinstellung quer zu der Bodenbearbeitungsrichtung durchquert, kann für den zugehörigen Arbeitsvorsprung der Vorsprungsbetrag geändert werden. Beispielsweise kann sich die Teileinstellvorrichtung im Inneren der Gemeinschaftseinstellvorrichtung abstützen und einen Außenradius aufweisen, der an einzelnen Stellen größer oder kleiner ist, als ein Außenradius der Gemeinschaftseinstellvorrichtung. Das vergrößert einen möglichen Einsatzbereich des Bodenbearbeitungsgerätes und vereinfacht ein Anpassen von verschiedenen Vorsprungsbeträgen.

Ferner kann das Teileinstellbauteil mindestens einen kronenförmigen Abschnitt aufweisen, dessen Kronenvorsprungsabschnitte entlang der Achsenrichtung der Gemeinschaftseinstellvorrichtung und zumindest teilweise um die Gemeinschaftseinstellvorrichtung herum vorstehen, und die Kronenvorsprungsabschnitte des mindestens einen kronenförmigen Abschnitts derart entlang der Achsenrichtung der Gemeinschaftseinstellvorrichtung verschiebbar sind, dass die Zugelemente an einer Verschiebungsposition des Teileinstellbauteils über dessen Kronenvorsprungsabschnitte verlaufen und an einer anderen Verschiebungsposition des Teileinstellbauteils nicht über dessen Kronenvorsprungsabschnitte verlaufen.

Wenn ein Zugelement über den Kronenvorsprungsabschnitt läuft, und wenn der kronenförmige Abschnitt somit ein Zugelement quert, wird der Vorsprungsbetrag des entsprechenden Vorsprungsabschnitts vergrößert oder verkleinert. Durch die verschiedenen Verschiebungspositionen kann bestimmt werden, wie viele Zugelemente ein kronenförmiger Abschnitt quert, und somit, wie viele Arbeitsvorsprünge um einen bestimmten Vorsprungsbetrag vergrößert oder verkleinert werden. Dadurch wird das Bodenbearbeitungsgerät vielseitig einsetzbar und ein Einstellen von verschiedenen Vorsprungsbeträgen ist in kurzer Zeit und mit geringem Aufwand möglich.

Die Kronenvorsprungsabschnitte können radial unterschiedliche Distanzen zu der Drehachse der Gemeinschaftseinstellvorrichtung haben. Je größer eine Distanz eines Kronenvorsprungsabschnittes ist, desto größer ist ein Vorsprungsbetrag, um den der entsprechende Arbeitsvorsprung vergrößert wird. Durch ein Verdrehen des Einstellbauteils bezüglich der Achsrichtung der Gemeinschaftseinstellvorrichtung kann für einen Kronenvorsprungsabschnitt, der ein bestimmtes Zugelement quert, ausgewählt werden, ob das entsprechende Zugelement über den Kronenvorsprungsabschnitt verläuft oder ob der Kronenvorsprungsabschnitt von dem Zugelement entfernt ist. Wenn das entsprechende Zugelement über den Kronenvorsprungsabschnitt verläuft, wird der entsprechende Arbeitsvorsprung um einen bestimmten Vorsprungsbetrag vergrößert oder verkleinert. Dadurch wird das Bodenbearbeitungsgerät vielseitig einsetzbar und ein Einstellen von verschiedenen Vorsprungsbeträgen ist in kurzer Zeit und mit geringem Aufwand möglich.

Die Kronenvorsprungsabschnitte können sich unterschiedlich weit in der Achsenrichtung der Gesamteinstellvorrichtung erstrecken. Dadurch können durch axiales Verschieben und Verdrehen des Teileinstellbauteils eine Vielzahl an unterschiedlichen Vorsprungsvarianten eingestellt werden. Dadurch wird das Bodenbearbeitungsgerät vielseitig einsetzbar und ein Einstellen von verschiedenen Vorsprungsbeträgen ist in kurzer Zeit und mit geringem Aufwand möglich.

Ferner kann das Teileinstellbauteil mehrere kronenförmige Abschnitte aufweisen, die miteinander verbunden sind, um gemeinsam verschoben zu werden.

Dadurch wird ermöglicht, unterschiedliche Gruppen von Arbeitsvorsprüngen gleichzeitig um bestimmte Vorsprungsbeträge zu ändern.

Soll eine Dammkultur bearbeitet werden, kann beispielsweise jeder kronenförmige Abschnitt die Form eines Tales zwischen zwei Dämmen abbilden. Wenn mehrere kronenförmige Abschnitte nebeneinander angeordnet sind, bildet das mehrere nebeneinanderliegende Täler ab. Über eine Verschiebung des Teileinstellbauteils können Positionen der kronenförmigen Abschnitte auf Positionen der Täler abgestimmt werden. Dadurch kann das Bodenbearbeitungsgerät sehr schnell auf ein bestimmtes Bodenoberflächenquerprofil eingestellt werden.

Außerdem können die Abstände der kronenförmigen Abschnitte zueinander eingestellt werden. Somit kann der Zinkenstriegel schnell auf bestimmte Damm- bzw. Talabstände des Bodens eingestellt werden.

Das Bodenbearbeitungsgerät kann ein Zinkenstriegel, eine Egge, eine Schar oder eine Hacke sein.

### Kurze Beschreibung der Zeichnungen

Fig. 1 ist eine perspektivische Ansicht einer Ausführungsform eines Zinkenstriegels als ein Bodenbearbeitungsgerät gemäß der vorliegenden Erfindung.
Fig. 2 ist eine Seitenansicht der Ausführungsform des Zinkenstriegels gemäß der vorliegenden Erfindung.
Fig. 3 ist eine perspektivische Ansicht eines Teileinstellbauteils, montiert an eine Gemeinschaftseinstellvorrichtung, gemäß der vorliegenden Erfindung.
Figuren 4A und 4B zeigen zwei unterschiedliche Teileinstellbauteile, montiert an die Gemeinschaftseinstellvorrichtung, gemäß der vorliegenden Erfindung.
Fig. 5 zeigt eine Aufnahme in einer Gemeinschaftseinstellvorrichtung für ein Teileinstellbauteil, gemäß der vorliegenden Erfindung.
Fig. 6 zeigt ein Teileinstellbauteil, das an einer Gemeinschaftseinstellvorrichtung montiert ist, gemäß der vorliegenden Erfindung.
Fig. 7 zeigt ein Teileinstellbauteil gemäß der vorliegenden Erfindung.
Fig. 8 zeigt eine weitere Ausführungsform eines Teileinstellbauteiles, montiert an eine Gemeinschaftseinstellvorrichtung, gemäß der vorliegenden Erfindung.
Fig. 9 ist eine Seitenansicht einer Teileinstellvorrichtung und einer Gemeinschaftseinstellvorrichtung, gemäß der vorliegenden Erfindung.
Fig. 10 zeigt eine Teileinstellvorrichtung, montiert an eine Gemeinschaftseinstellvorrichtung, gemäß der vorliegenden Erfindung.
Fig. 11 zeigt eine weitere Teileinstellvorrichtung, montiert an eine Gemeinschaftseinstellvorrichtung, gemäß der vorliegenden Erfindung.

### Beschreibung der Ausführungsformen

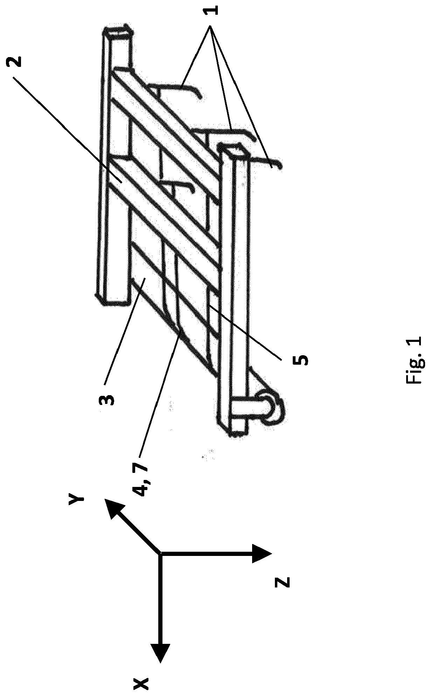

Fig. 1 zeigt einen Zinkenstriegel als ein Beispiel eines Bodenbearbeitungsgeräts gemäß einer Ausführungsform der vorliegenden Erfindung in perspektivischer Ansicht. Der Zinkenstriegel wird in der Bodenbearbeitungsrichtung X über einen landwirtschaftlich zu bearbeitenden Boden gezogen. Dabei wirkt die Schwerkraft des Zinkenstriegels in Schwerkraftrichtung Z nach unten in Richtung Boden. Eine Querrichtung Y steht senkrecht auf der Bodenbearbeitungsrichtung X und senkrecht auf der Schwerkraftrichtung Z.

Mehrere Zinken 1 sind drehbar an einem Rahmen 2 befestigt. Die Zinkenstriegel bzw. Zinken 1 stehen in Schwerkraftrichtung Z in Richtung zum Boden hin vor und stellen in dieser Ausführungsform beispielhaft die Arbeitsvorsprünge dar. An den Zinken 1 sind in der Bodenbearbeitungsrichtung X Zugelemente 5 befestigt. Die Zugelemente 5 sind an einer Gemeinschaftseinstellvorrichtung 3 angebracht.

Wird die Gemeinschaftseinstellungsvorrichtung 3, betrachtet in der Querrichtung Y, im Uhrzeigersinn gedreht, schwenken die Zinken 1 entgegen dem Urzeigersinn und klappen entgegen der Bodenbearbeitungsrichtung X und entgegen der Schwerkraftrichtung Z weg. Wird die Gemeinschaftseinstellungsvorrichtung 3, betrachtet in der Querrichtung Y, entgegen dem Uhrzeigersinn gedreht, schwenken die Zinken 1 im Uhrzeigersinn.

Dabei können Anschläge in dem Rahmen 2 das Schwenken des Zinkens 1 sowohl im, als auch gegen den Uhrzeigersinn begrenzen.

In dieser Ausführungsform sind die Zinken 1 derart ausgebildet, dass sie durch Rückstellfedern (nicht dargestellt) entgegen dem Uhrzeigersinn zurückgestellt bzw. entgegen der Bodenbearbeitungsrichtung X gedreht und dadurch vom Boden wegbewegt werden. Alternativ ist es möglich, dass die Zinken 1 auch entgegen der Bodenbearbeitungsrichtung X gedreht und dadurch vom Boden weg bewegt werden durch ein Vorsehen von rückwärtigen elastischen Zugelementen ähnlich den Zugelementen 5 auf der vorderen Seite.

An der zylinderförmigen Gemeinschaftseinstellvorrichtung 3 sind Teileinstellvorrichtungen 4 oder Teileinstellelemente 7 befestigt, die nicht dargestellt sind.

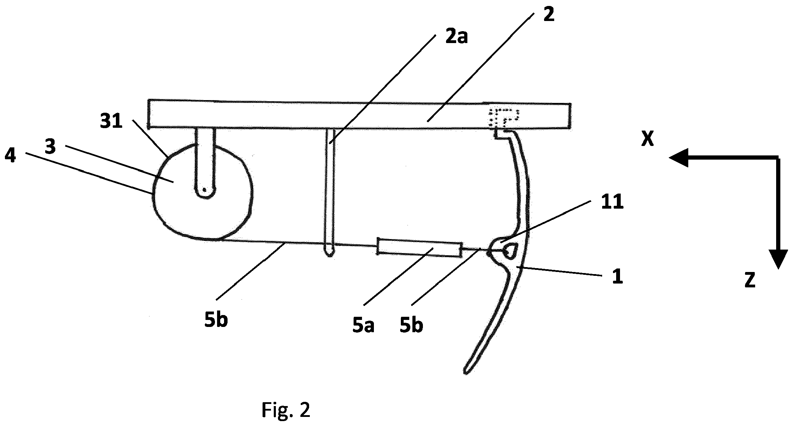

Fig. 2 ist eine Seitenansicht der Ausführungsform des Zinkenstriegels gemäß der vorliegenden Erfindung.

Während in der Ausführungsform, die in Fig. 1 gezeigt ist, das Zugelement 5 an der Oberseite der Gemeinschaftseinstellungsvorrichtung 3 in Kontakt gelangt, kommt das Zugelement 5 der Ausführungsform, die in Fig. 2 gezeigt ist, das Zugelement 5 an der Unterseite der Gemeinschaftseinstellungsvorrichtung 3 in Kontakt. Die Wicklungsrichtung des Zugelements 5 ist nicht wesentlich für die vorliegende Erfindung.

Ein Zinken 1 ist in einen Rahmen 2 versenkt und eingehakt. Der Zinken ist in seiner gesamten Länge gebogen, wobei die Form des Zinkens nicht wesentlichen für die Erfindung ist und entsprechend anders geformt sein kann. Der Zinken 1 kann um die Stelle, an der er eingehakt ist, geschwenkt werden. Der Zinken 1 hat einen Anschlussabschnitt 11, der mit einem Zugelement 5 verbunden ist. Das Zugelement 5 besteht aus einem Federbauteil 5a in der Mitte und Seilabschnitten 5b, 5b in Bodenbearbeitungsrichtung X vor und hinter dem Federbauteil. Ein Vorhandensein eines Federbauteils 5a ist nicht wesentlich für die Erfindung und kann entsprechend entfallen. Der in Bodenbearbeitungsrichtung X vordere Teil des Zugelements 5 ist mit einem Anschlussabschnitt 31 der Gemeinschaftseinstellvorrichtung 3 verbunden. Der vordere Teil des Zugelements 5 liegt auf einem Teileinstellelement 7.

Das Stützelement 2a stützt in dieser Ausführungsform das Zugelement 5, so dass dieses nicht übermäßig durchhängen kann. Das Stützelement 2a könnte aber auch als Basis für eine alternative, hier nicht näher ausgeführte Teileinstellvorrichtung sein, die den Verlauf des Zugelements in X-Richtung, Y-Richtung und/oder Z-Richtung an dem Stützpunkt des Zugelements 5 am Stützelement 2a verändern kann. Der Verlauf kann durch ein Verdrehen, Verschwenken und/oder ein Versetzen (horizontal und/oder vertikal) des Stützelements 2a als alternative Teileinstellvorrichtung geändert werden.

Der Zinken 1 befindet sich während der Bodenbearbeitung mit seiner in Schwerkraftrichtung unteren Spitze unterhalb einer Bodenoberfläche. Wenn die Bewegung der unteren Zinkenspitze durch den Boden blockiert wird, während sie in Bodenbearbeitungsrichtung X durch den Boden bewegt wird, schwenkt der Zinken 1 entgegen dem Uhrzeigersinn weg. Dadurch verringert sich die Erstreckung des Zinkens 1 in der Schwerkraftrichtung Z und die Zinkenspitze wandert allmählich entgegen der Schwerkraftrichtung Z aus dem Boden heraus. Dabei dehnt sich das Federelement des Zugelements 5. Der Zinken wird mit größerer Kraft in Bodenbearbeitungsrichtung X gezogen und die Fläche der Zinkenspitze, die in den Boden drückt, ist geringer. Dadurch steigt der Druck, den die Zinkenspitze auf den Boden ausübt (Zinkendruck).

Die Schwenkbewegung des Zinkens 1 entgegen dem Uhrzeigersinn hält solange an, bis entweder die Zinkenspitze den Boden komplett verlassen hat, oder der Zinkendruck so groß geworden ist, dass der ihm entgegengestellte Widerstand durchbrochen wird.

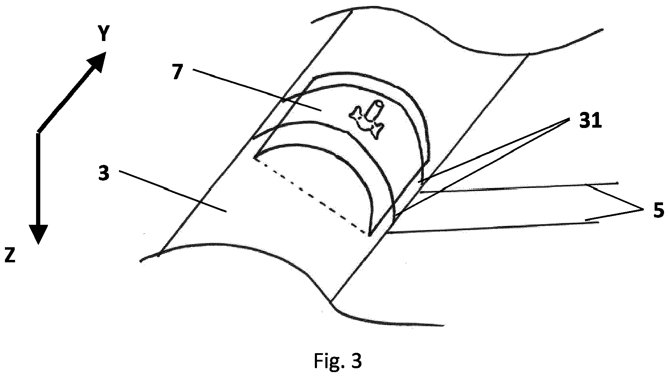

In Fig. 3 ist das Teileinstellelement 7 dargestellt, das mittels einer Flügelmutter an einer Gemeinschaftseinstellvorrichtung 3 befestigt ist. Die Gemeinschaftseinstellvorrichtung 3 hat eine Aussparung in einer Breite in der Querrichtung Y entsprechend dem Teileinstellelement 7. Ein Gewindestift ist in der Mitte der Aussparung vorgesehen. Das Teileinstellelement 7 hat ein Loch mit einem Durchmesser größer als der Durchmesser des Gewindestiftes.

Das Teileinstellelement 7 wird bei der Montage an die Gemeinschaftseinstellvorrichtung 3 zunächst auf den Gewindestift geschoben. Dann wird das Teileinstellelement so orientiert, dass in der Querrichtung Y Die Breite des Teileinstellelements 7 mit der Breite der Aussparung in der Gemeinschaftseinstellvorrichtung 3 übereinstimmt. Die Flügelmutter wird auf den Gewindestift geschraubt und das Teileinstellelement 7 axial befestigt. Damit sich das Teileinstellelement 7 nicht um den Gewindestift verdrehen kann, ist das Teileinstellelement 7 seitlich in der Querrichtung mittels Führungsflächen der Gemeinschaftseinstellvorrichtung 3 gestützt, die entlang der Bodenbearbeitungsrichtung X orientiert sind.

Dann werden die Zugelemente 5 an der Gemeinschaftseinstellvorrichtung 3 an Anschlussabschnitten 31 (nicht dargestellt) befestigt. Wird die Gemeinschaftseinstellvorrichtung 3 im Uhrzeigersinn um seine Drehachse gedreht, die in die Querrichtung Y weist, wird der vordere Seilabschnitt des Zugelements 5 auf die zylinderförmige Gemeinschaftseinstellvorrichtung aufgewickelt bis Spannung in dem Zugelement auftritt. Wenn Spannung in dem Zugelement auftritt, wird der entsprechende Zinken 1 (nicht dargestellt) entgegen dem Uhrzeigersinn geschwenkt. Dabei verläuft der vordere Seilabschnitt des Zugelements 5 über dem Teileinstellelement 7, wenn die entsprechenden Zinken 1 eine Stellung erreicht haben, mit der die Bodenbearbeitung durchgeführt werden soll (Arbeitsstellung).

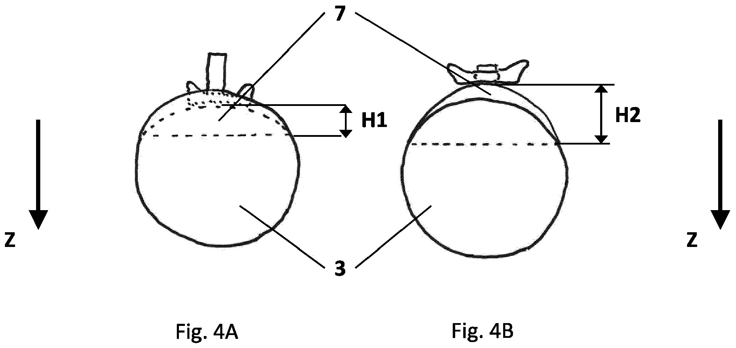

Fig. 4A und Fig. 4B zeigen unterschiedliche Teileinstellelemente 7, die an der Gemeinschaftseinstellvorrichtung 3 mittels Flügelmuttern befestigt sind.

Die Höhe H1 des Teileinstellelements 7 aus Fig. 4A ist geringer als die Höhe H2 des Teileinstellelements 7 aus Fig. 4B. Dadurch ist eine Umfangslänge (wirksamer Umfang) um die Gemeinschaftseinstellvorrichtung und die Teileinstelleinrichtung herum, d.h. um die Welle der Gemeinschaftseinstellvorrichtung mit eingebautem Teileinstellelement 7, in Fig. 4A kleiner als in Fig. 4B. Wird die Gemeinschaftseinstellvorrichtung 3 einmal entgegen dem Uhrzeigersinn gedreht, wird die freie Länge des Zugelements 5 in der Ausführung gemäß Fig. 4A weniger reduziert als in der Ausführung gemäß Fig. 4B. Somit wird ein entsprechender Zinken 1 in der Ausführung gemäß Fig. 4A weniger geschwenkt und der Änderungsbetrag der Höhe des Zinkens 1 in der Schwerkraftrichtung Y ist geringer als in der Ausführung gemäß Fig. 4B.

Allgemein bedeutet das, je geringer eine Höhe H1, H2 des Teileinstellelements 7 ist, desto geringer ist auch der verursachte Änderungsbetrag des Zinkens 1. Somit kann mit einer Reihe unterschiedlicher Teileinstellelemente 7, die in der Querrichtung Y nebeneinander angeordnet sind, die unterschiedliche Höhen H1, H2, Hx haben und die mit jeweils unterschiedlichen Zinken 1 verbunden sind, eine Reihe unterschiedlicher Äderungsbeträge des Zinkenvorsprungs realisiert werden. Wird die Gemeinschaftseinstellvorrichtung entgegen dem Uhrzeigersinn gedreht, bis die Zinken 1 ihre Arbeitsstellung angenommen haben, haben die Zinken 1 unterschiedliche Höhen in der Schwerkraftrichtung Z, und die Zinken 1 bilden ein Profil, betrachtet in Bodenbearbeitungsrichtung X. So kann mit den Zinken 1 ein bestimmtes Bodenoberflächenquerprofil abgebildet bzw. nachgebildet werden. Idealerweise haben die Zinkenspitzen nach erfolgter (Teil-)Einstellung alle den gleichen Abstand zum Boden, so dass dann, wenn die Gemeinschaftseinstellvorrichtung durch eine Drehung derselben die Gesamtheit der Zinken in die Betriebsstellung bzw. Arbeitsstellung bewegen, für jeden Zinken der gleiche Zinkendruck (gleiche Bodeneindringtiefe) vorliegt.

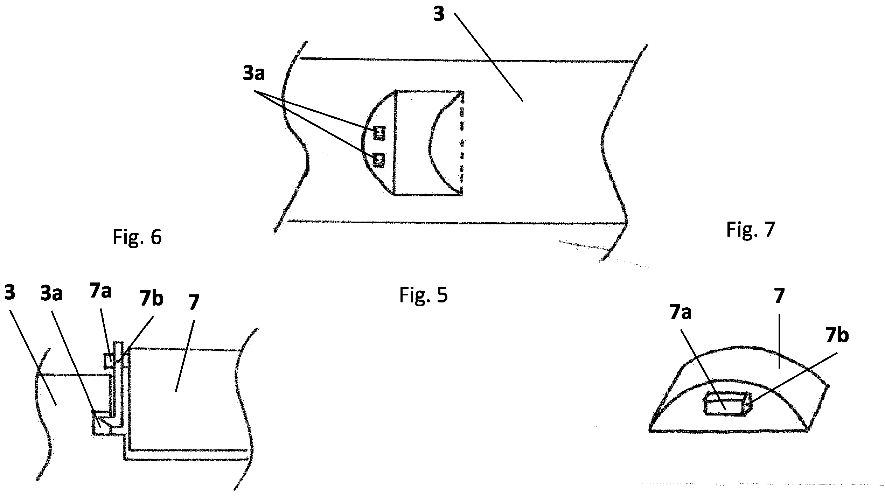

In Figuren 5 bis 7 ist ein Verbindungsmechanismus zwischen der Gemeinschaftseinstellvorrichtung 3 und des Teileinstellelements 7 dargestellt.

In den in Fig. 5 dargestellten seitlichen Führungsflächen sind zwei eckige Vertiefungen eingearbeitet. In Fig. 6 ist veranschaulicht, dass ein Haken von Clips in eine Vertiefung 3a der seitlichen Führungsflächen eingehakt werden kann. In Fig. 7 ist veranschaulicht, dass an seitlichen Flächen des Teileinstellelements 7 Vorsprünge 7a vorgesehen sind, die mit einem kleinen Durchgangsloch 7b versehen sind. In das Durchgangsloch 7b wird eine Drehachse geschoben. Ein Clip wird auf der Drehachse gelagert. Zwischen dem Haken und dem Clip ist eine Feder vorgesehen (nicht dargestellt), die den Haken in montiertem Zustand in die Öffnung der Gemeinschaftseinstellvorrichtung 3 drückt. Dadurch wird das Teileinstellelement 7 bezüglich der Gemeinschaftseinstellvorrichtung in radialer Richtung fixiert. Zum Entfernen des Teileinstellelements 7 wird der Clip an der Oberseite nach außen weg von dem Teileinstellelement 7 gedrückt. Dadurch bewegt sich der Haken über eine Hebelwirkung zu dem Teileinstellelement 7 und gibt das Loch frei. Dann kann das Teileinstellelement 7 in axialer Richtung demontiert werden.

Eine Reihe weiterer Befestigungsmechanismen sind ungeachtet der ober dargestellten Befestigungsmechanismen möglich. Vorteilhaft ist ein Befestigungsmechanismus dann, wenn er vor Ort (auf dem Feld) werkzeuglos betätigt werden kann. Besonders vorteilhaft ist ein werkzeuglos installierbarer Befestigungsmechanismus dann, wenn lediglich ein einfaches oder komplexes Teileinstellelement mit der Gemeinschaftseinstellvorrichtung gekoppelt werden muss, ohne dass weitere (separate) Bauteile, wie z.B. eine Flügelmutter, benötigt werden. Dies vereinfacht den Montagevorgang vor Ort.

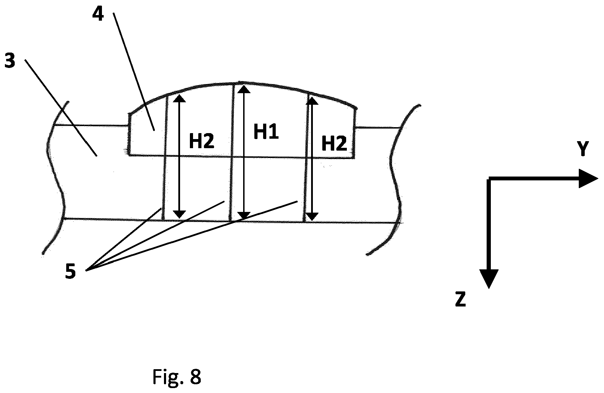

Fig. 8 zeigt ein Teileinstellelement 7, betrachtet in der Bodenbearbeitungsrichtung X, das an einer Gemeinschaftseinstellvorrichtung 3 befestigt ist.

Die Höhe H1 in der Mitte des Teileinstellelements 7 hat einen größeren Querschnitt und eine größere Höhe als die Höhe H2 an den axialen Enden des Teileinstellelements 7. Sowohl in der Mitte, als auch an den axialen Enden des Teileinstellelements 7 ist je ein Zugelement 5 angeordnet. Der Zinken 1 (mittlerer Zinken 1) der mit dem mittleren Zugelement 5 verbunden ist, erfährt einen größeren Änderungsbetrag als die Zinken 1 (äußere Zinken 1), die mit den Zugelementen 5 an den axialen Enden der Teileinstellvorrichtung verbunden sind. In Arbeitsstellung steht der mittlere Zinken 1 somit weiter in der Schwerkraftrichtung Z vor als die äußeren Zinken 1. Soll auf die Zinkenspitzen der einzelnen Zinken 1 der gleiche Zinkendruck während der Bodenbearbeitung wirken, eignet sich der mittlere Zinken 1 dazu, an einem Tal angeordnet zu sein und die beiden äußeren Zinken 1 eigenen sich dazu, an einem Damm angeordnet zu sein, jeweils so, dass die Zinkenspitzen gleich weit in den Boden ragen. Mit dem Teileinstellelement 7 kann somit das Bodenoberflächenquerprofil eines Bodens abgebildet werden, der beispielsweise für Dammkulturen gestaltet ist. Damit wirkt auf jeden Zinken 1 während der Bodenbearbeitung der gleiche Zinkendruck. Außerdem bildet ein derartig geformtes Teileinstellelement durch dessen bauchige Form z.B. näherungsweise einen Bodenabdruck eines landwirtschaftlichen Reifens des Bodenbearbeitungsgeräts nach, was die Auswahl des geeigneten Teileinstellelements an entsprechender Montageposition an der Welle der Gemeinschaftseinstellvorrichtung vereinfacht.

Diese Ausführungsform ist in keinster Weise auf drei Zinken bzw. drei Zugelemente beschränkt und kann mehr oder weniger Zinken bzw. Zugelemente umfassen.

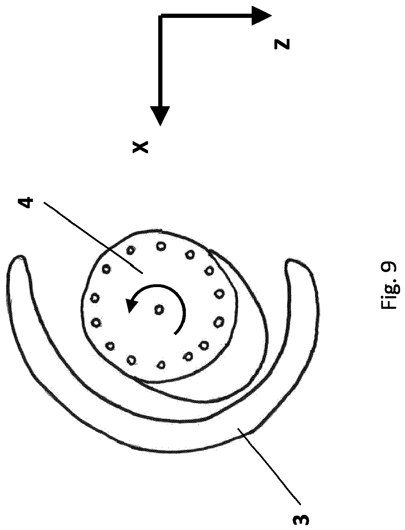

Fig. 9 zeigt eine weitere Ausführungsform von einer Teileinstellvorrichtung 4 und einer Gemeinschaftseinstellvorrichtung 3.

Die Teileinstellvorrichtung 4 ist in der Gemeinschaftseinstellvorrichtung 3 gelagert und wird teilweise von ihr umschlossen. Die Teileinstellvorrichtung 4 und die Gemeinschaftseinstellvorrichtung 3 haben die gleiche Drehachse. Die Teileinstellvorrichtung 4 hat einen runden Abschnitt und einen Nockenabschnitt. Wird die Teileinstellvorrichtung 4 entgegen dem Uhrzeigersinn gedreht, wandert der Nocken allmählich zu der Öffnung in der Gemeinschaftseinstellvorrichtung 3 auf der rechten Seite in Fig. 9. Die Teileinstellvorrichtung hat auf der Stirnseite, betrachtet in der Querrichtung Y, einen Lochkreis mit einer Vielzahl an Arretierungslöchern. Mit einem entsprechenden Federstift (nicht abgebildet) kann die Teileinstellvorrichtung 4 relativ zu der Gemeinschaftseinstellvorrichtung 3 in der radialen Richtung arretiert bzw. fixiert werden.

Je weiter der Nocken der Teileinstellvorrichtung 4 aus der Öffnung der Gemeinschaftseinstellvorrichtung 3 herausragt, desto größer ist der wirksame Umfang von Teileinstellvorrichtung 4 und Gemeinschaftseinstellvorrichtung 3, über den Zugelemente 5 verlaufen können. Je größer der wirksame Umfang, desto großer wird der Änderungsbetrag der entsprechenden Zinken 1 in der Arbeitsposition.

Mit der Verdrehung der Teileinstellvorrichtung 4 relativ zu der Gemeinschaftseinstellvorrichtung 3 kann somit ein gewünschter Änderungsbetrag eingestellt werden.

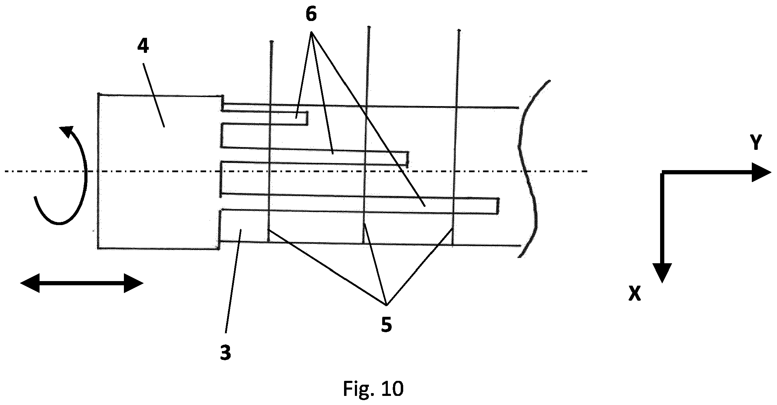

Fig. 10 stellt ein Teileinstellbauteil 7 mit einem kronenförmigen Abschnitt gemäß einer weiteren Ausführungsform der vorliegenden Erfindung dar.

Der kronenförmige Abschnitt weist verschiedene Kronenvorsprungsabschnitte 6 auf. Die kronenförmigen Abschnitte erstrecken sich in der Querrichtung Y parallel zu der Drehachse der Gemeinschaftseinstellvorrichtung 3. Die Kronenvorsprungsabschnitte 6 erstrecken sich unterschiedlich lang und haben unterschiedliche Abstände zu der Drehachse der Gemeinschaftseinstellvorrichtung 3. Der kronenförmige Abschnitt kann sowohl um die Drehachse der Gemeinschaftseinstellvorrichtung 3 gedreht werden, als auch entlang der Drehachse der Gemeinschaftseinstellvorrichtung 3 verschoben werden. Der kronenförmige Abschnitt ist axial auf der zylindrischen Gemeinschaftseinstellvorrichtung 3 geführt. Der kronenförmige Abschnitt kann sowohl in verschiedenen axialen Positionen, als auch in verschiedenen radialen Positionen relativ zu der Gemeinschaftseinstellvorrichtung 3 fixiert werden. In der vorliegenden Ausführungsform ist die Distanz zwischen jeweils einem Kronenvorsprungsabschnitt 6 und der Drehachse der Gemeinschaftseinstellvorrichtung 3 größer als der Radius der zylindrischen Gemeinschaftseinstellvorrichtung 3.

Dadurch, dass die Kronenvorsprungsabschnitte 6 unterschiedlich lang sind, verlaufen unterschiedlich viele Zugelemente 5 über die einzelnen Kronenvorsprungsabschnitte 6. Über den oberen kürzesten Kronenvorsprungsabschnitt 6 verläuft lediglich ein Zugelement 5. Über den mittleren Kronenvorsprungsabschnitt 6 verlaufen zwei Zugelemente 5 und über den unteren Kronenvorsprungsabschnitt 6 verlaufen alle drei Zugelegte 5. Anders ausgedrückt verläuft das linke Zugelement 5 über alle drei Kronenvorsprungsabschnitte 6. Das mittlere Zugelement 5 verläuft über zwei Kronenvorsprungsabschnitte 6 und das rechte Zugelement 5 verläuft über lediglich einen Kronenvorsprungsabschnitt 6.

Wenn ein Zugelement 5 über einen kronenförmigen Abschnitt verläuft, ist der wirksame Umfang, über den das Zugelement 5 verläuft, größer als der Umfang der zylindrischen Gemeinschaftseinstellvorrichtung 3. Wenn ein Zugelement 5 über einen kronenförmigen Abschnitt verläuft, wird somit ein Änderungsbetrag eines zugehörigen Zinkens 1 größer, als wenn das Zugelement 5 lediglich über die zylindrische Gemeinschaftseinstellvorrichtung 3 verläuft. Über je mehr Kronenvorsprungsabschnitte 6 ein Zugelement verläuft, desto größer ist der Änderungsbetrag des zugehörigen Zinkens 1.

Der vorliegende kronenförmige Abschnitt kann nun so weit entgegen der Querrichtung Y (nach links in Abb. 10) verschoben werden, dass das rechte Zugelement 5 nicht mehr über den untersten Kronenvorsprungsabschnitt 6 verläuft, womit der Änderungsbetrag des zugehörigen Zinkens 1 verringert wird. Der vorliegende Kronenförmige Abschnitt kann auch so weit entgegen der Querrichtung verschoben werden, dass kein Zugelement 5 mehr über einen der drei Kronenvorsprungsabschnitte 6 verläuft.

Mit anderen Worten kann mit der axialen Verschiebung des kronenförmigen Abschnittes eingestellt werden, über wie viele Kronenvorsprungsabschnitte 6 ein Zugelement 5 verläuft und in welchem Ausmaß ein Änderungsbetrag durch den kronenförmigen Abschnitt vergrößert oder verringert wird.

Außerdem kann der kronenförmige Abschnitt um die Drehachse der Gemeinschaftseinstellvorrichtung 3 gedreht werden. Die Zugelemente 5 erstrecken sich in der Bodenbearbeitungsrichtung X. Wird der kronenförmige Abschnitt, betrachtet aus der Querrichtung Y, im Uhrzeigersinn gedreht, bewegt sich der oberste (vorderste in der Bodenbearbeitungsrichtung X) Kronenvorsprungsabschnitt 6 in der Bodenbearbeitungsrichtung X und gleichzeitig in Schwerkraftrichtung Z. Wird der kronenförmige Abschnitt weitergedreht, bewegt sich der Kronenvorsprungsabschnitt 6 so weit in die Schwerkraftrichtung Z, dass das linke Zugelement 5 den Kontakt zu dem obersten Kronenvorsprungsabschnitt 6 verliert.

Wenn kein Kontakt zwischen dem obersten Kronenvorsprungsabschnitt 6 und dem linken Zugelement 5 mehr herrscht, verlängert der oberste Kronenvorsprungsabschnitt 6 für das linke Zugelement nicht mehr den wirksamen Umfang. Somit vergrößert der oberste Kronenvorsprungsabschnitt 6 für den zugehörigen Zinken 1 auch nicht mehr den Änderungsbetrag.

Somit kann auch mittels einer Verdrehung des kronenförmigen Abschnittes eingestellt werden, für welchen Zinken 1 ein Änderungsbetrag vergrößert oder verkleinert wird.

Durch Kombination eines Verschiebens und Verdrehens des kronenförmigen Abschnittes steht somit eine Vielzahl an Vorsprungsvarianten zur Verfügung, auf die die verschiedenen Zinken 1 eingestellt werden können.

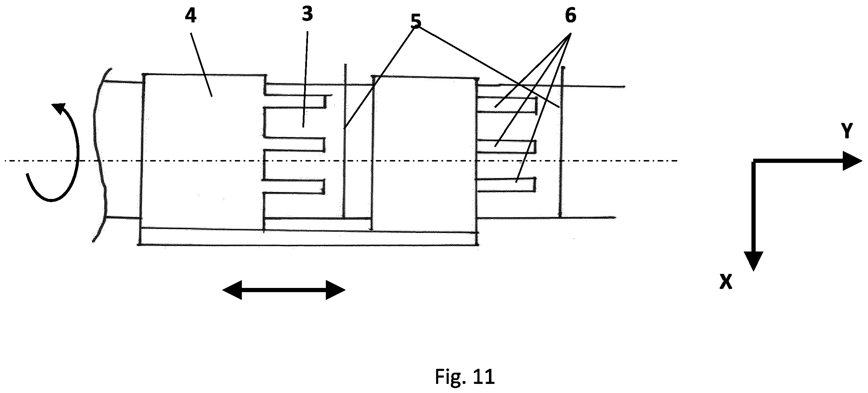

Fig. 11 zeigt eine weitere Ausführungsform einer Teileinstellvorrichtung 4, der aus zwei kronenförmigen Abschnitten besteht, die miteinander verbunden sind. Der Abstand der kronenförmigen Abschnitte zueinander kann eingestellt und fixiert werden.

Es können somit zwei kronenförmige Abschnitte gleichzeitig verschoben oder verdreht werden. Somit kann die Anzahl der Zinken 1, deren Änderungsbetrag gleichzeitig eingestellt werden kann, vergrößert werden.

Die verschiedenen Ausführungsformen, die vorangehend beschrieben sind, können in ihren jeweiligen Charakteristika miteinander kombiniert werden, solange sich dadurch keine offensichtlichen Widersprüche ergeben.

## Patentansprüche

1. Bodenbearbeitungsgerät mit
einem Rahmen (2), von dem eine Vielzahl von Arbeitsvorsprüngen (1) in Richtung zum Boden hin vorragen,
zumindest einer Gemeinschaftseinstellvorrichtung (3), die in der Lage ist, den Vorsprungsbetrag von der Vielzahl von Arbeitsvorsprüngen (1) gemeinschaftlich einzustellen, und
zumindest einer Teileinstellvorrichtung (4), die in der Lage ist, den von der Gemeinschaftseinstellvorrichtung (3) eingestellten Vorsprungsbetrag für einen einzelnen oder eine Teilgruppe von der Vielzahl von Arbeitsvorsprüngen (1) zu ändern.

2. Bodenbearbeitungsgerät nach Anspruch 1, wobei
die Teileinstellvorrichtung (4) den von der Gemeinschaftseinstellvorrichtung (3) eingestellten Vorsprungsbetrag für einen einzelnen oder eine Teilgruppe von der Vielzahl von Arbeitsvorsprüngen (1) vergrößert oder verringert.

3. Bodenbearbeitungsgerät nach Anspruch 1 oder 2, wobei
Zugelemente (5) Anschlussabschnitte (11) der Arbeitsvorsprünge (1) mit zugehörigen Anschlussabschnitten (31) der Gemeinschaftseinstellvorrichtung (3) verbinden und
die Gemeinschaftseinstellvorrichtung (3) den Vorsprungsbetrag von der Vielzahl von Arbeitsvorsprüngen (1) dadurch einstellt, dass die Anschlussabschnitte (31) der Gemeinschaftseinstellvorrichtung (3) um eine Dreh- und Schwenkachse der Gemeinschaftseinstellvorrichtung (3) herum bewegt werden.

4. Bodenbearbeitungsgerät nach Anspruch 3, wobei
dadurch, dass die Anschlussabschnitte der Gemeinschaftseinstellvorrichtung um eine Dreh- bzw. Schwenkachse der Gemeinschaftseinstellvorrichtung bewegt werden, die freie Länge der Zugelemente verändert wird.

5. Bodenbearbeitungsgerät nach einem der Ansprüche 1 bis 4, wobei
die Teileinstellvorrichtung (4) in der Lage ist, den von der Gemeinschaftseinstellvorrichtung (3) gemeinschaftlich eingestellten Vorsprungsbetrag zusätzlich zu ändern, indem sie die freie Länge und/oder den Verlauf der Zugelemente (5) zwischen den Anschlussabschnitten (11) von dem einzelnen oder der Teilgruppe von der Vielzahl von Arbeitsvorsprüngen (1) und den zugehörigen Anschlussabschnitten (31) der Gemeinschaftseinstellvorrichtung (3) verkürzt oder verlängert verglichen zu einer freien Länge oder dem Verlauf der Zugelemente (5) zwischen den Anschlussabschnitten (11) von den Verbleibenden von der Vielzahl von Arbeitsvorsprüngen (1) und den zugehörigen Anschlussabschnitten (31) der Gemeinschaftseinstellvorrichtung (3).

6. Bodenbearbeitungsgerät nach Anspruch 3 oder 4, wobei
die Teileinstellvorrichtung (4) in der Lage ist, den von der Gemeinschaftseinstellvorrichtung (3) gemeinschaftlich eingestellten Vorsprungsbetrag zusätzlich zu ändern, indem sie einen Achsenabstand von Zugelementen oder Anschlussabschnitten (11) von dem einzelnen oder der Teilgruppe von der Vielzahl von Arbeitsvorsprüngen (1) hinsichtlich einer Dreh- oder Schwenkachse der Gemeinschaftseinstellvorrichtung (3) vergrößert oder verkleinert verglichen zu einem Achsenabstand von Zugelementen oder Anschlussabschnitten (11) von den Verbleibenden von der Vielzahl von Arbeitsvorsprüngen (1) hinsichtlich einer Dreh- oder Schwenkachse der Gemeinschaftseinstellvorrichtung (3).

7. Bodenbearbeitungsgerät nach einem der Ansprüche 1 bis 6, wobei
die Teileinstellvorrichtung (4) als ein von der Gemeinschaftseinstellvorrichtung (3) separates Teileinstellbauteil vorgesehen ist, das senkrecht zur Achsenrichtung der Gemeinschaftseinstellvorrichtung (3) an der Gemeinschaftseinstellvorrichtung (3) lösbar montierbar ist.

8. Bodenbearbeitungsgerät nach Anspruch 7, wobei
die Gemeinschaftseinstellvorrichtung (3) im Wesentlichen aus einer dreh- und/oder schwenkbaren Welle besteht, die sich quer zur Arbeitsrichtung des Bodenbearbeitungsgeräts erstreckt, und
die Teileinstellvorrichtung (4) in axialer und/oder radialer Richtung der dreh- und/oder schwenkbaren Welle fixierbar ist.

9. Bodenbearbeitungsgerät nach Anspruch 8, wobei
das Teileinstellbauteil (7) in Achsenrichtung der Gemeinschaftseinstellvorrichtung (3) länglich ist, so dass mehrere benachbarte Zugelemente (5) gleichzeitig eingestellt werden können.

10. Bodenbearbeitungsgerät nach Anspruch 9, wobei
das Teileinstellbauteil (7) einen sich verändernden Querschnitt aufweist, in einer Richtung senkrecht zur Achsenrichtung der dreh- und/oder schwenkbaren Welle und senkrecht zu einer Montagerichtung des Teileinstellbauteils (7) an der dreh- und/oder schwenkbaren Welle gesehen.

11. Bodenbearbeitungsgerät nach Anspruch 7, wobei
der sich verändernden Querschnitt hinsichtlich einer Längsrichtung des Teileinstellbauteils (7) in der Mitte größer ist als an den axialen Enden von diesem.

12. Bodenbearbeitungsgerät nach einem der Ansprüche 1 bis 6, wobei
die Teileinstellvorrichtung (4) als ein Teileinstellbauteil (7) vorgesehen ist, das in Achsenrichtung der Gemeinschaftseinstellvorrichtung (3) verschiebbar an der Gemeinschaftseinstellvorrichtung (3) montiert ist.

13. Bodenbearbeitungsgerät nach Anspruch 12, wobei
das Teileinstellbauteil (7) mindestens einen kronenförmigen Abschnitt aufweist, dessen Kronenvorsprungsabschnitte (6) entlang der Achsenrichtung der Gemeinschaftseinstellvorrichtung (3) und zumindest teilweise um die Gemeinschaftseinstellvorrichtung (3) herum vorstehen, und
die Kronenvorsprungsabschnitte (6) des mindestens einen kronenförmigen Abschnitts derart entlang der Achsenrichtung der Gemeinschaftseinstellvorrichtung (3) verschiebbar sind, dass die Zugelemente (5) an einer Verschiebungsposition des Teileinstellbauteils (7) über dessen Kronenvorsprungsabschnitte (6) verlaufen und an einer anderen Verschiebungsposition des Teileinstellbauteils (7) nicht über dessen Kronenvorsprungsabschnitte (6) verlaufen.

14. Bodenbearbeitungsgerät nach Anspruch 13, wobei
das Teileinstellbauteil (7) mehrere kronenförmige Abschnitte aufweist, die miteinander verbunden sind, um gemeinsam verschoben zu werden.

15. Bodenbearbeitungsgerät nach einem der vorangehenden Ansprüche, wobei das Bodenbearbeitungsgerät ein Zinkenstriegel, eine Egge, eine Schar oder eine Hacke ist.

16. Bodenbearbeitungsgerät nach einem der vorangehenden Ansprüche, wobei
jedem Arbeitsvorsprung (1) ein entsprechendes Zugelement (5) zugeordnet ist.

17. Bodenbearbeitungsgerät nach einem der Ansprüche 3 bis 16, wobei
jedes Zugelement (5) aus einer Feder, Seilabschnitten und/oder Stababschnitten besteht.
